# EUROPÄISCHE PATENTSCHRIFT

(11) **EP 3 991 064 B1**
(45) Veröffentlichungstag und Bekanntmachung des Hinweises auf die Patenterteilung: **10.05.2023**
(21) Anmeldenummer: 20715301.6
(22) Anmeldetag: 24.03.2020
(51) Int. Cl.: G06F 16/84

(54) **VERFAHREN UND PROZESSOREINRICHTUNG ZUM WECHSELN EINES DATENFORMATS VON KOMMUNIKATIONSDATEN FÜR EINE GERÄTEKOMMUNIKATION SOWIE KRAFTFAHRZEUG**
METHOD AND PROCESSOR DEVICE FOR CHANGING A DATA FORMAT OF COMMUNICATION DATA OF A DEVICE COMMMUNICATION, AND MOTOR VEHICLE
PROCÉDÉ ET DISPOSITIF À PROCESSEUR POUR MODIFIER UN FORMAT DE DONNÉES DE COMMUNICATION D'UN APPAREIL DE COMMUNICATION AINSI QU'UN VÉHICULE À MOTEUR

(30) Priorität: 27.06.2019 DE 102019209314
(43) Veröffentlichungstag der Anmeldung: 04.05.2022
(73) Patentinhaber: Audi AG, 85045 Ingolstadt (DE)
(72) Erfinder: MIELKE, Tobias, 85057 Ingolstadt (DE)
(86) Internationale Anmeldenummer: PCT/EP2020/058172
(87) Internationale Veröffentlichungsnummer: WO 2020/259880

(56) Entgegenhaltungen:
- US-A1- 2016 044 107
- Anonymous: "Generate Json schema from XML schema (XSD) [closed]", , 2. Mai 2015 (2015-05-02), Seiten 1-2, XP055690680, Gefunden im Internet: URL:https://stackoverflow.com/questions/39 22026/generate-json-schema-from-xml-schema -xsd [gefunden am 2020-04-30]
- Anonymous: "Convert XSDs to Protos", , 14 July 2015 (2015-07-14), XP055839482, Retrieved from the Internet: URL:https://web.archive.org/web/2015071407 1427/https://stackoverflow.com/questions/6 442703/convert-xsds-to-protos [retrieved on 2021-09-09]

## Beschreibung

Die Erfindung betrifft ein Verfahren und eine Prozessoreinrichtung, mittels welchen für eine Gerätekommunikation ein Datenformat zu übertragenden Kommunikationsdaten gewechselt werden kann. Die Erfindung betrifft auch ein Kraftfahrzeug, mittels welchem die besagte Datenkommunikation durchgeführt werden kann.

Wenn in einem Kraftfahrzeug ein Steuergerät Speicherdaten aus seinem Datenspeicher an einen fahrzeugexternen Kommunikationspartner, beispielsweise einen Server des Internets, aussenden möchte, kann hierfür eine so genannte Serialisierung vorgesehen sein, um aus Speicherdaten die zu sendenden Kommunikationsdaten zu erzeugen. Die Serialisierung ist in der Informatik eine Abbildung von strukturierten Speicherdaten auf eine sequenzielle Darstellungsform, in welcher eine Übertragung über einen Übertragungskanal möglich ist. Mittels der Serialisierung ist somit eine Übertragung von Datenstrukturen oder Speicherobjekten über ein Kommunikationsnetzwerk und deren Rekonstruktion im Datenspeicher des Empfängergeräts möglich. Eine Datenstruktur oder ein Speicherobjekt kann ein Speicherelement oder mehrere Speicherelemente umfassen, die zusammen als die Datenstruktur oder das Speicherobjekt adressiert werden können. Ein Speicherelement kann beispielsweise ein Integer oder eine Float oder ein String oder auch eine Verknüpfung verschiedener Datentypen sein, beispielswiese ein Java Objekt.

Die Umwandlung von Speicherdaten in serialisierte Kommunikationsdaten bewirkt, dass die Informationen der Speicherdaten in einem serialisierten Datenformat vorliegen und somit die übertragbaren Kommunikationsdaten ergeben. Bekannte serialisierte Datenformate für die Serialisierung sind XML (Extensible Markup Language) und Protbuf. Um das Erzeugen von Kommunikationsdaten zu ermöglichen, kann in einem Steuergerät eine entsprechende Programmierung oder ein entsprechender Programmcode vorgesehen sein, der als Serialisierer bezeichnet wird. Es kann sich um eine Programmbibliothek handeln. Es wird dabei pro Kombination aus Quelldatentyp der Speicherdaten und Zieldatenformat der Kommunikationsdaten (zum Beispiel von Java Objekt nach XML) ein Serialisierer vorgesehen. Dieser Serialisierer ist dann in der Lage alle denkbaren Speicherdaten des Quelldatentyps in Kommunikationsdaten umzuwandeln. Der Serialisierer benötigt aber für jeden vorgesehenen Kommunikationsvorgang oder Nachrichtenaustausch der Gerätekommunikation, also für jeden Nachrichtentyp, noch eine jeweilige Metamodelldatei, da für jede Nachricht festgelegt werden muss, wie das in der Nachricht zu versendende Speicherobjekt in das serialisierte Datenformat der Kommunikationsdaten umgewandelt werden muss. Anders ausgedrückt müssen die Strukturelemente des Nachrichtentyps, also die Elemente der jeweiligen Nachricht, festgelegt werden (wie beispielsweise ein Parameter "TürstatusVorneLinks").

Möchte man nun den Kommunikationsstandard wechseln dahingehend, dass die Kommunikationsdaten in einem anderen Datenformat übertragen werden, also in einer anderen serialisierten Form, so bedeutet dies, dass man zum einen den Serialisierer austauschen muss, um aus den Speicherdaten des Quelldatentyps (z.B. Java-Objekt) das neue Datenformat der Kommunikationsdaten erzeugen zu können. Es muss also beispielsweise statt einem Serialisierer für Java Objekt nach XML nun ein Serialisierer für Java Objekt nach ProtoBuf eingesetzt werden. Hierzu kann eine Programmbibliothek ausgetauscht werden. Allerdings müssen zum anderen auch die für die einzelnen Nachrichten oder Kommunikationsvorgänge bereitgestellten Metamodelldateien ebenfalls neu geschrieben werden, da sie nun für den neuen Serialisierer und das neue Datenformat abgefasst werden müssen. Es kann sich hierbei um eine Vielzahl von Metamodelldateien handeln (z.B. mehr als hundert oder mehrere hundert). Genauso benötigt andersherum ein externer Kommunikationspartner, der Kommunikationsdaten hin zu dem Kraftfahrzeug sendet, bei einem Wechsel des Datenformats der Kommunikationsdaten ebenfalls neue Metamodelldateien. Somit kann es bei der Gerätekommunikation durch den Wechsel des Datenformats von Kommunikationsdaten zu einem erheblichen Arbeitsaufwand kommen, den man aber vermeiden möchte.

Aus der CN 103942280 A ist bekannt, dass man zusätzlich zu Kommunikationsdaten in einem spezifischen Datenformat auch Programmcodes automatisiert erzeugen kann. Würde man hiermit in automatisierter Weise die Kommunikationspartner einer Gerätekommunikation umprogrammieren wollen, um sie dazu zu bringen, ihre Kommunikationsdaten in einem anderen Datenformat zu erzeugen, so kann dies aber fehleranfällig sein.

Aus der CN 103970737 A ist bekannt, dass man eine Datenstruktur im JSON-Format in ein Protobuf-Format umwandeln kann, um die Daten zu versenden.

Aus der US 2012/0246653 A1 ist ein Konvertierungsscript bekannt, um XML-Elemente in Protobuf-Elemente umzuwandeln. Sowohl XML (extensible mark-up language) als auch Protobuf sind als Datenformat für die Serialisierung bekannt. Das beschriebene Verfahren zum Umwandeln von XML-Elementen in Protobuf-Elemente weist allerdings den Nachteil auf, dass ein Steuergerät zunächst XML-Elemente erzeugen müsste, um daraus dann Protobuf-Elemente zu erzeugen, sodass sich also zwei Stufen der Serialisierung ergeben, wo nur eine Stufe notwendig sein sollte.

Aus "Convert XSDs to Protos", 14. Juli 2015, URL: https://web.archive.org/web/20150714071427/https:// stackoverflow.com/questions/6442703/convert-xsds-to-protos sind XML bzw. Proto-Serialisierer, die mit Schemadateien zur Bereitstellung von Daten zum Austausch zwischen Kommunikationspartnern arbeiten, sowie das Wechseln von XML zu Proto bekannt.

Der Erfindung liegt die Aufgabe zugrunde, bei einer Gerätekommunikation die Möglichkeit zu schaffen, ein Datenformat der übertragenen Kommunikationsdaten zu wechseln.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Durch die Erfindung ist ein Verfahren zum Wechseln eines Datenformats der Kommunikationsdaten einer Gerätekommunikation bereitgestellt. Das Verfahren geht davon aus, dass die Gerätekommunikation zwischen einem ersten Kommunikationspartner (beispielsweise einem Steuergerät eines Kraftfahrzeugs) und einem zweiten Kommunikationspartner (beispielsweise einem fahrzeugexternen Gerät) vorgesehen ist. Mit "fahrzeugextern" ist hierbei gemeint, dass der zweite Kommunikationspartner außerhalb des Kraftfahrzeugs angeordnet ist, in welchem sich das Steuergerät, das heißt der erste Kommunikationspartner, befindet. Das Verfahren geht also davon aus, dass von einem Ursprungsdatenformat in eine Zieldatenformat gewechselt werden soll.

Es wird davon ausgegangen, dass die Kommunikationspartner in besonderer Weise ausgestaltet sind, indem der jeweilige Kommunikationspartner zu versendende Speicherdaten (z.B. zumindest ein Datenobjekt) eines jeweiligen lokalen Datenspeichers (beispielsweise eines RAM [random access memory] oder einer Festplatte oder eines anderen volatilen oder nichtvolatilen Speichers) auf der Grundlage einer ersten Metamodelldatei mittels eines ersten Serialisierers in das Ursprungsdatenformat umwandelt und aussendet. Es ist hier der Anschaulichkeit halber nur von einer Metamodelldatei die Rede, wie sie für die Definition eines einzelnen Nachrichtentyps vorgesehen sein kann. Selbstverständlich können die folgenden Verfahrensschritte auf für mehrere Metamodelldateien durchgeführt werden, um weitere Nachrichtentypen zu definieren. Die besagte erste Metamodelldatei definiert alle im Ursprungsdatenformat zu sendenden Strukturelemente eines der ersten Metamodelldatei zugeordneten Nachrichtentyps. Eine Metamodelldatei für einen Nachrichtentyp "Türstatus" (Türstatus-Definitionsdatei) für ein Coupé kann zum Beispiel die Strukturelemente TürstatusVornLinks, TürstatusVornRechts und TürstatusKofferraum definieren. Die aktuellen Werte dieser Strukturelemente ergeben sich aus den Speicherdaten, was in einer konkreten Nachricht dieses Nachrichtentyps resultiert. Erst durch Bereitstellen der ersten Metamodelldatei ist also in dem jeweiligen Kommunikationspartner bekannt, wie ein jeweiliges Speicherelement der Speicherdaten in ein geeignetes oder korrespondierendes Strukturelement für einen Nachrichtentyp der Kommunikationsdaten umzuwandeln ist, um es aussenden zu können. Ein Strukturelement der Kommunikationsdaten ist also ein für die Gerätekommunikation serialisiertes Speicherelement. Durch Umsetzen der ersten Metamodelldatei ergibt sich eine serielle Abarbeitung der Speicherelemente und damit ihre Serialisierung. Metamodelldateien sind dabei reine Strukturbeschreibungen, es sind jedoch keine ausführbaren Dateien. Ausführbar ist lediglich der Algorithmus des Serialisierers, der als Eingabeparameter dann die Metamodelldatei verlangt.

Die Idee ist nun, automatisiert die Konvertierung der Metamodelldateien des Ursprungsdatenformats (z.B. XML) in die Metamodelldateien des neuen Zieldatenformats (z.B. Protobuf) durchzuführen, wodurch der Aufwand und das Fehlerrisiko minimiert werden. Dieser Schritt müsste ansonsten einmal pro Nachrichtentyp (also einmal pro Metamodelldatei) manuell durchgeführt werden, was bei hunderten von Nachrichtentypen nicht leistbar ist.

Die automatisch aus den Metamodellen für das Ursprungsdatenformat (z.B. XML) generierten Metamodelle für das Zieldatenformat (z.B. Protobuf), d.h. ein Metamodell pro Nachrichtentyp, werden dann in der Gerätesoftware der Kommunikationspartner abgelegt. Diese übergibt die Metamodelle dann an den neu eingesetzten Serialisierer, womit dieser in der Lage ist, alle Nachrichten aus der Form der Speicherdaten (z.B. Java Objekt) in das neue Kommunikationsdatenformat oder Zieldatenformat (z.B. Protobuf) zu übertragen.

Um das Sendeverhalten der Kommunikationspartner zu ändern, also in das Zieldatenformat der ausgesendeten Kommunikationsdaten zu wechseln, wird bei dem Verfahren durch eine Prozessoreinrichtung aus der besagten ersten Metamodelldatei mittels einer Transformationsvorschrift eine zweite Metamodelldatei erzeugt. Dies kann ohne das Vorliegen konkreter Speicherdaten und außerhalb der Kommunikationspartner erfolgen, beispielsweise in einem Entwicklungslabor. Durch die Transformationsvorschrift wird das jeweilige Strukturelement der ersten Metamodelldatei einem jeweils korrespondierenden Strukturelement der zweiten Metamodelldatei zugeordnet, sodass die zweite Metamodelldatei alle im Zieldatenformat zu sendenden Strukturelemente des Nachrichtentyps definiert. Damit ist der Nachrichtentyp für das Zieldatenformat festgelegt.

Damit ist also durch die zweite Metamodelldatei ein neues Sendeverhalten definiert, durch welches für den Sendevorgang oder Nachrichtentyp jeweils die zugeordneten Speicherdaten in der Gerätekommunikation ausgesendet werden, lediglich das Datenformat der hierbei erzeugten Kommunikationsdaten entspricht nun dem Zieldatenformat. Entsprechend wird nun in dem jeweiligen Kommunikationspartner dessen erster Serialisierer durch einen zweiten Serialisierer für das Zieldatenformat und dessen erste Metamodelldatei durch die zweite Metamodelldatei ersetzt. Somit wird also allein durch Wechseln des Serialisierers und der Metamodelldatei ermöglicht, dass die Kommunikationspartner ihr Kommunikationsverhalten oder Sendeverhalten dahingehend ändern, dass die Kommunikationsdaten im Zieldatenformat erzeugt und übertragen werden. Die benötigten Serialisierer können hierbei dem Stand der Technik entnommen werden. Die automatisierte Erzeugung der zweiten Metamodelldatei bedeutet weniger Aufwand und ein deutlich geringeres Fehlerrisiko als die händische, individuelle Anpassung der Kommunikationspartner, insbesondere wenn mehrere Metamodelldateien vorhanden sind. Dabei haben beide Kommunikationspartner vor und nach dem Kommunikationsdatenformatwechsel ein gemeinsames Metamodell pro Nachrichtentyp, sowie ein gemeinsames für alle Nachrichtentypen gleichermaßen gültiges Serialisierer/Deserialisierer-Paar.

Die Erfindung umfasst auch Ausführungsformen, durch die sich zusätzliche Vorteile ergeben.

In einer Ausführungsform sieht das Ursprungsdatenformat lesbare Textdaten als Strukturelemente der Kommunikationspartner und das Zieldatenformat maschinenlesbare Binärdaten als Strukturelemente vor. Textdaten können also Wörter in einer menschlichen Sprache, beispielsweise Englisch, enthalten, wie beispielsweise: "Message" und/oder insbesondere getrennte vordefinierte Signalwörter. Binärdaten sind dagegen Daten in einer Binärcodierung, wie sie durch einen Prozessor verarbeitet werden können, also im Falle eines Integer kann dies beispielsweise das Big-Endian oder Little-Endian-Datenformat sein. Durch die Ausführungsform wird erreicht, dass die Kommunikationsdaten kompakter sind, also für dieselben Speicherdaten weniger Bytes für deren Übertragung zwischen den Kommunikationspartnern notwendig sind.

Gemäß der Erfindung sieht nur die erste Metamodelldatei, also nicht die zweite Metamodelldatei, als Strukturelement eine Liste mit Listenelementen vor, deren Anzahl auf eine Maximalanzahl begrenzt ist. Beispielsweise kann also eine Liste mit N Listenelementen vorgesehen sein, wobei N eine ganze Zahl ist, beispielsweise N=5. Eine solche begrenzte Liste ist also bei dieser Ausführungsform in der zweiten Metamodelldatei nicht vorgesehen, sodass also kein entsprechender Umwandlungsschritt in der zweiten Metamodelldatei erzeugt werden kann, welcher beim Versenden von Speicherdaten bewirkt, dass das Aussenden von Listenelementen auf die Maximalanzahl begrenzt wird. Dies wird dagegen nur bei der ersten Metamodelldatei durch den Datentyp der begrenzten Liste bewirkt. Durch die Transformationsvorschrift zum Umwandeln der ersten Metamodelldatei in die zweite Metamodelldatei wird deshalb die Liste in der zweiten Metamodelldatei auf eine Liste mit unbegrenzter Anzahl an Listenelementen abgebildet. Würde nun aber ein Kommunikationspartner auf Basis der zweiten Metamodelldatei Speicherdaten in Kommunikationsdaten umwandeln, so würde dies nicht die Begrenzung auf die Maximalanzahl ergeben, wie es beim Ausführen der ersten Metamodelldatei vorgesehen oder möglich wäre. Um dies auch für die zweite Metamodelldatei zu erreichen, werden zusätzlich für den jeweiligen Kommunikationspartner Programmdaten mit Programminstruktionen für eine Speicherroutine bereitgestellt. Durch diese Programmdaten erfolgt bei Verwendung der zweiten Metamodelldatei das Begrenzen der Liste auf die Maximalanzahl der Listenelemente durch Beenden des Sendens der Liste bei Erreichen der Maximalanzahl. Mit anderen Worten wird also die Begrenzung nicht in der zweiten Metamodelldatei abgebildet oder umgesetzt, sondern in den zusätzlichen Programmdaten, deren Programminstruktionen dann von den jeweiligen Kommunikationspartnern ausgeführt werden müssen. Somit bleibt insgesamt der Funktionsumfang der ersten Metamodelldatei, das heißt die Liste mit begrenzter Anzahl an Listenelementen, erhalten. Die Programmdaten können beispielsweise als Programmbibliothek (z.B. als sogenannte Shared-Library) in dem jeweiligen Kommunikationspartner installiert werden. Die zusätzlichen Programmdaten können beispielsweise für den zweiten Serialisierer vorgesehen sein.

Gemäß der Erfindung ist das besagte erste Datenformat ein XML-Format und als erste Metamodelldatei wird ein so genanntes XML-Schema, nämlich eine XSD-Datei, zugrunde gelegt. Es wird also bei dem Verfahren davon ausgegangen, dass der sendende Kommunikationspartner eine Serialisierung der Speicherdaten in das Ursprungsdatenformat XML auf Grundlage einer XSD-Metamodelldatei durchführt oder vornimmt. Durch diese Ausführungsform ergibt sich der Vorteil, dass eine Vielzahl heute verfügbarer Steuergeräte und anderer Kommunikationspartner, die XML-formatierte Kommunikationsdaten aussenden, berücksichtigt oder ihr Sendeverhalten umgewandelt werden kann.

Gemäß der Erfindung ist das Zieldatenformat ein Protobuf-Format und als zweite Metamodelldatei wird eine Protobuf-Definitionsdatei erzeugt. Das Protobuf-Format ermöglicht das Aussenden von Speicherdaten als maschinenlesbare Binärdaten. Zudem ist das Protobuf-Format ein kompaktes Datenformat. Darüber hinaus ist auch relevant, dass Protobuf abwärtskompatibel ist, wenn man ein paar wenige Grundsätze bei der Modellierung der Protobuf-Definitionsdatei einhält. Denn ein aktueller Deserialisierer ist in der Lage Kommunikationsdaten zu lesen, die mit einem älteren Serialisierer mittels eines älteren Metamodells erstellt wurden. Die in aktueller Version hinzugekommenen Strukturelemente werden dabei ignoriert. Die Bedeutung für die Entwicklung besteht darin, dass während sich das Protobuf Metamodell während der Jahre weiterentwickelt, der Code der Serialisierer und Deserialisierer älterer Versionen weiterhin funktionstüchtig bleibt. Ein Vorteil gegenüber anderen Formaten besteht daher beispielsweise in folgender Situation. Wäre man bereits vor 10 Jahren auf Protobuf umgestiegen, dann wären die heute 10 Jahre alten Fahrzeuge heute noch in der Lage, die mit heutigen Serialisierern generierten Aufträge von heutigen Servern zu verstehen und auszuführen, auch wenn das Format sich über die Jahre stetig weiterentwickelt. Mit XML ist das nicht möglich, hier müssten die Server so lange redundant alle Serialisierer/Deserialisierer Versionen in Betrieb halten, bis es im Feld kein einziges Fahrzeug mehr mit dieser Version gibt.

Gemäß der Erfindung ist durch die erste Metamodelldatei ein Datenbaum definiert und durch die Prozessoreinrichtung wird der Datenbaum rekursiv durchlaufen. Somit erreicht die Prozessoreinrichtung nacheinander die Blätter des Baumes, also das jeweilige zu erzeugende Strukturelement, in derjenigen Reihenfolge, wie es durch den Baum festgelegt ist. Für jedes Blatt des Baumes, das die Prozessoreinrichtung erreicht oder liest, wird ein Umwandlungsschritt ausgeführt, der das Aussenden im Zieldatenformat vorsieht. Somit bleibt durch das rekursive Abarbeiten oder Durchlaufen des Datenbaums auch in der zweiten Metamodelldatei der Baum vollständig. Allein das rekursive Abarbeiten des Datenbaumes bewirkt diesen Effekt.

In einer Ausführungsform wird die zweite Metamodelldatei in allen Kommunikationspartnern bereitgestellt. Hierdurch ergibt sich der Vorteil, dass empfangene Kommunikationsdaten in jedem empfangenden Kommunikationspartner mittels der bereitgestellten zweiten Metamodelldateien decodiert werden können.

Um das erfindungsgemäße Verfahren durchzuführen, ist durch die Erfindung auch eine Prozessoreinrichtung mit zumindest einem Prozessor und einem Datenspeicher bereitgestellt. Der zumindest eine Prozessor kann beispielsweise ein Mikroprozessor oder ein Mikrocontroller oder ein ASIC (application specific integrated circuit) sein. Der zumindest eine Prozessor kann mit dem Datenspeicher gekoppelt sein, der wiederum beispielsweise ein RAM oder eine Festplatte oder einen Flashspeicher umfassen kann. Die Prozessoreinrichtung ist dazu eingerichtet, von einer Ausführungsform des erfindungsgemäßen Verfahrens die die Prozessoreinrichtung betreffenden Schritte durchzuführen. Hierzu kann in dem Datenspeicher ein entsprechender Programmcode oder eine entsprechende Software mit Programminstruktionen gespeichert sein, die bei Ausführen durch den zumindest einen Prozessor diesen veranlassen, diese Schritte des Verfahrens durchzuführen. Insbesondere ist die Prozessoreinrichtung also dazu eingerichtet, auf der Grundlage einer Transformationsvorschrift aus einer ersten Metamodelldatei eine zweite Metamodelldatei zu erzeugen. Die Transformationsvorschrift kann beispielsweise in Form eines Programmcodes oder einer Software und/oder einer Look-up-Tabelle bereitgestellt sein. Die Prozessoreinrichtung kann beispielsweise in einem Entwicklungslabor bereitgestellt sein, in welchem auch eine Betriebssoftware für ein Steuergerät für ein Kraftfahrzeug und/oder stationäre Kommunikationspartner, wie beispielsweise ein Server des Internets, entwickelt werden kann.

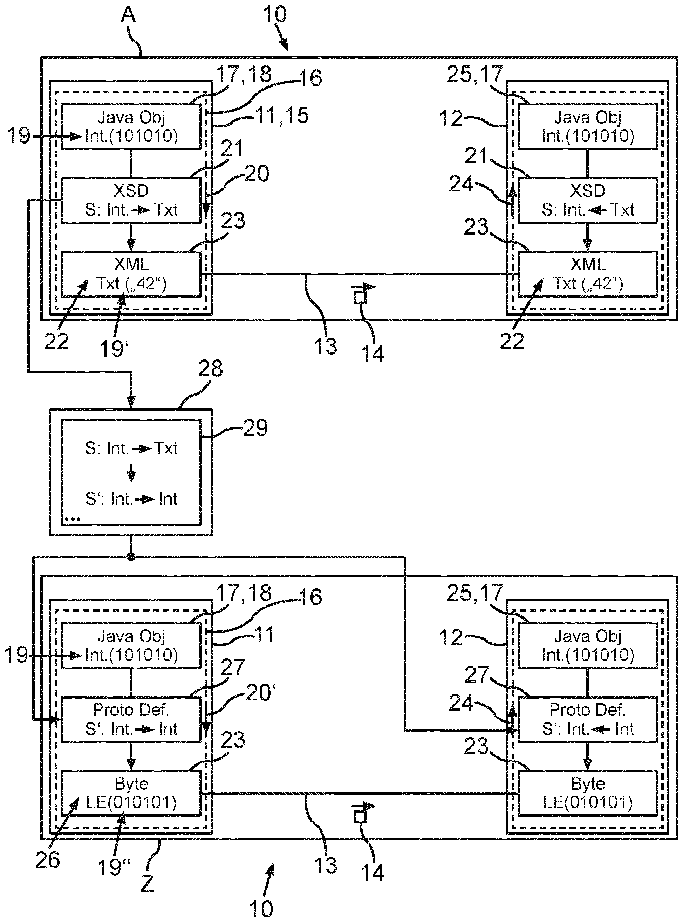

Um in Bezug auf eine Gerätekommunikation Kommunikationsdaten mit auswechselbarem Datenformat erzeugen zu können, ist durch die Erfindung ein Kraftfahrzeug vorgesehen, welches ein Steuergerät aufweist, das dazu eingerichtet ist, dass es zu versendende Speicherdaten eines jeweiligen lokalen Datenspeichers auf der Grundlage einer Metamodelldatei mittels eines Serialisierers in ein vorbestimmtes Datenformat umwandelt und die in das Datenformat umgewandelten Speicherdaten als Kommunikationsdaten aussendet, die zwischen dem Steuergerät des Kraftfahrzeugs einerseits und einem fahrzeugexternen Kommunikationspartner andererseits ausgetauscht werden können. Als fahrzeugexterner Kommunikationspartner kann im Rahmen der Erfindung beispielsweise ein anderes Kraftfahrzeug oder ein Server des Internets vorgesehen sein. Es kann auch anders herum von einem Server des Internets ein Befehl an das Kraftfahrzeug ausgesendet werden, durch welchen ein Betriebsverhalten des Kraftfahrzeugs festgelegt wird. Ein solcher Befehl kann dann die Übertragung von Speicherdaten in dem Datenformat hin zu dem Kraftfahrzeug als Kommunikationsdaten erfordern. Das Steuergerät des Kraftfahrzeugs kann selbst wiederum Speicherdaten aus seinem Datenspeicher als Kommunikationsdaten an den fahrzeugexternen Kommunikationspartner aussenden. Um die Speicherdaten in die Kommunikationsdaten umzuwandeln, wird pro Nachrichtentyp die jeweilige Metamodelldatei alle in dem Datenformat zu sendenden Strukturelemente des Nachrichtentyps definiert. Ein Metamodell definiert für ein Format X, welche Strukturelemente in einer X-Datei vorkommen, welche Datentypen diese aufweisen und ob gegebenenfalls die Reihenfolge der Strukturelemente von Bedeutung ist. Beispiel: Eine XSD für einen Coupé definiert, dass es jeweils ein Boolean Element für Tür links, Tür rechts und Kofferraum gibt und dass die Reihenfolge irrelevant ist. Der Serialisierer definiert die Umwandlung eines Speicherobjekts in eine X-Datei. Die Logik des Serialisierers bestimmt also die Abbildung der Datentypen des Speicherelements in die Datentypen der Strukturelemente der Kommunikationsdaten. Beispiel: Die Serialisiererlogik könnte zum Beispiel festlegen, dass die Boolean Elemente des Java Objekts in Protobuf als Integer abgebildet werden, "1" für "true" und "0" für "false" (da Protobuf den Boolean-Typ unterstützt, wäre das nicht sinnvoll. Aber genau diese Entscheidungen trifft der Entwickler des Serialisierers).

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Im Folgenden sind Ausführungsbeispiele der Erfindung beschrieben. Hierzu zeigt die einzige Figur:
- Fig.: eine Skizze zur Veranschaulichung einer Ausführungsform des erfindungsgemäßen Verfahrens mittels einer Ausführungsform der erfindungsgemäßen Prozessoreinrichtung, damit ein Kraftfahrzeug gemäß der Erfindung eine Gerätekommunikation durchführen kann.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

Die Fig. zeigt ein Kommunikationssystem 10, umfassend zwei Kommunikationspartner 11, 12, die über eine Kommunikationsverbindung 13 Kommunikationsdaten 14 austauschen können. Bei dem Kommunikationspartner 11 kann es sich um ein Kraftfahrzeug 15 handeln, bei dem Kommunikationspartner 12 beispielsweise um einen Server des Internets, welcher als so genanntes Backend Dienste für das Kraftfahrzeug 15 bereitstellen kann. Die Kommunikationsverbindung 13 kann beispielsweise auf der Grundlage einer Internetverbindung und/oder einer Mobilfunkverbindung realisiert sein. Im Folgenden wird beispielhaft die Situation beschrieben, dass der Kommunikationspartner 11 als Sender und der Kommunikationspartner 12 als Empfänger fungiert, wobei zusätzlich oder alternativ auch die entgegengesetzte Übertragungsrichtung vorgesehen sein kann. Dargestellt sind eine Anfangs- oder Ursprungssituation A und ein Zielsituation Z. Als Kommunikationsdaten 14 können beispielsweise Zustandsdaten des Kraftfahrzeugs 15 übertragen werden, also beispielsweise eine aktuelle Geschwindigkeit oder gesammelte Daten betreffend einen Fahrbetrieb und/oder ein Türzustand. Die Kommunikationsdaten 14 können durch ein Steuergerät 16 des Kraftfahrzeugs 15 erzeugt werden.

Es können die auszusendenden Informationen als Speicherdaten 17 in einem Datenspeicher 18 des Steuergeräts 16 oder allgemein des Kommunikationspartners 11 gespeichert sein. Als Speicherdaten 17 kann beispielsweise eine Datenstruktur, beispielsweise ein so genanntes Java-Objekt vorgesehen sein. Die Speicherdaten 17 können beispielsweise eine Speichervariable oder ein Speicherelement 19 vom Typ Integer Int umfassen. In der Fig. ist beispielhaft dargestellt, dass der Dateninhalt eines solchen Speicherelements Int die Bitfolge 101010 sein kann, was (bei Big-Endian-Notierung) der dezimalen Zahl 42 entspricht.

Zum Versenden der Speicherdaten 17 mit beispielsweise dem Speicherelement 19 (Integer Int) in einer Nachricht eines vorbestimmten Nachrichtentyps kann durch den Kommunikationspartner 11 eine Serialisierung mittels eines Serialisierers 20 durchgeführt werden, durch welchen die Speicherdaten 17 in ein Datenformat überführt oder umgewandelt werden, in welchem die Kommunikationsdaten 14 vorliegen sollen. Die Serialisierung kann durch eine erste Metamodelldatei 21 für den Nachrichtentyp beschrieben oder definiert sein, die in dem Kommunikationspartner 11 gespeichert sein und/oder von dem Serialisierer 20 geladen werden kann. Als ein Beispiel für eine solche erste Metamodelldatei 21 ist in der Fig. als XSD-Datei angegeben. Durch die erste Metamodelldatei 21 kann beispielsweise ein Strukturelement S beschrieben sein, das in den Kommunikationsdaten 14 enthalten sein soll und für dessen Erzeugung der Integer Int umzuwandeln ist in lesbare Textdaten Txt. Zum Aussenden der Speicherdaten 17 mit dem Speicherelement 19 vom Typ Int wird also gemäß der ersten Metamodelldatei 21 zumindest der Umwandlungsschritt für das Speicherelement S durchgeführt, wenn der Sendezeitpunkt oder die Sendeposition in den Kommunikationsdaten 14 für das Speicherelement Int erreicht ist. Durch Ausführen der ersten Metamodelldatei 21, also die Serialisierung durch die Serialisierer 20, entsteht somit ein umgewandeltes Speicherelement 19' als Strukturelement S der Kommunikationsdaten 14, wobei als ein Ursprungsdatenformat 22 des Strukturelements S beispielsweise XML vorgesehen sein kann.

Welches Ursprungsdatenformat 22 erzeugt wird, wird durch den Serialisierer 20 und die erste Metamodelldatei 21 festgelegt. In dem Ursprungsdatenformat 22 kann beispielsweise vorgesehen sein, dass die Speicherdaten 17 als menschen-lesbare Textdaten gesendet werden, sodass sich also für das Speicherelement 19 vom Typ Int ein menschenlesbarer Text ergeben muss, wie es auch durch das das Strukturelement S angegeben ist. Das als Strukturelement S verwendete umgewandelte Speicherelement 19' kann also im Fall der 18 eine Bitfolge 101010 im Datenspeicher 18 die Zeichenfolge aus den beiden Zeichen "4" und "2" ergeben, sodass sich der lesbare Text "42" ergibt.

Es können noch weitere Strukturelemente in der Metamodelldatei 21 definiert sein, sodass sich insgesamt umgewandelte Speicherdaten 23 ergeben, beispielsweise eine XML-Datei. Die in dem Ursprungsdatenformat 22 umgewandelten Speicherdaten 23 können dann als Teil der Kommunikationsdaten 14 an den Kommunikationspartner 12 ausgesendet werden. In dem Kommunikationspartner 12 kann aus den empfangenen Kommunikationsdaten 14, die den umgewandelten Speicherdaten 23 entsprechen, durch einen Serialisierer oder Parser 24 kann mittels einer Deserialisierung auf der Grundlage der ersten Metamodelldatei 21 in einem Datenspeicher 25 das Speicherelement 19 wieder rekonstruiert werden, also beispielsweise ein Java-Objekt.

Um nun das Kommunikationssystem 10 dahingehend umzustellen, dass die Kommunikationspartner 11, 12 die Kommunikationsdaten 14 nicht mehr in dem Ursprungsdatenformat 22, sondern in einem Zieldatenformat 26 übertragen, ist bei den Kommunikationspartnern 11, 12 lediglich notwendig den Serialisierer 20 durch einen Serialisierer 20' und die erste Metamodelldatei 21 durch eine geänderte oder andere zweite Metamodelldatei 27 für den Serialisierer 20' auszutauschen.

Die Fig. zeigt hierzu die Ausgangssituation A, in welcher die erste Metamodelldatei 21 verwendet wird, und die Zielsituation Z, in welcher die zweite Metamodelldatei 27 verwendet wird.

Die zweite Metamodelldatei 27 kann dabei durch eine Prozessoreinrichtung 28 aus der ersten Metamodelldatei 21 automatisiert erzeugt werden. Dies erspart einem Entwickler das händische Umstellen des Sendeverhaltens der Kommunikationspartner 11, 12 dahingehend, dass die Metamodelldatei 21 (und jede weitere Metamodelldatei für den Serialsierer 20) nicht manuell umgeschrieben werden muss, um Kommunikationsdaten 14 zukünftig im Zieldatenformat zu versenden.

Die Prozessoreinrichtung 28 kann durch eine Transformationsvorschrift 29 programmiert oder konfiguriert sein, durch welche vorgegeben wird, wie die Prozessoreinrichtung 28 aus der ersten Metamodelldatei 21 die zweite Metamodelldatei 27 erzeugen soll. Hierbei erfolgt eine Umwandlung der einzelnen Strukturelemente aus der ersten Metamodelldatei 21. Beispielhaft ist dies in der Fig. für das Strukturelement S gezeigt, das aus einem Integer Int einen Text Txt ergibt. Dieses Strukturelement S kann transformiert oder abgebildet werden in ein Strukturelement S', welches für den Integer Int beispielsweise ein binäres Datenelement, beispielsweise einen Integer Int, vorsieht. So kann jedes Strukturelement S aus der Metamodelldatei 21 in ein korrespondierendes Strukturelement S' für die Metamodelldatei 27 umgewandelt werden. Dies kann in der beschriebenen Weise z.B. mittels eines Programmcodes und/oder einer Lookup-Tabelle als Transformationsvorschrift 29 geschehen. Hierdurch entsteht die zweite Metamodelldatei 27, die nun in jedem Kommunikationspartner 11, 12 bereitgestellt werden kann, sodass dieser jeweils sein Sendeverhalten dahingehend ändert, dass aus den Speicherdaten 17 umgewandelte Speicherdaten 23 erzeugt werden, die aber im Zieldatenformat 26 und nicht im Ursprungsdatenformat 22 vorliegen, also im beispielhaft dargestellten Falle des Integers Int nicht mehr im Textformat als Text Txt, sondern als Integer Int (beispielsweise in Little-Endian LE). Hierzu muss in den Kommunikationspartner 11, 12 der Serialsierer 20' bereitgestellt werden, da dieser die zweite Metamodelldatei 27 laden können und diese abarbeiten oder interpretieren können muss, genau wie der Serialisierer 20 zuvor die erste Metamodelldatei 21. Es ergibt sich somit das Zieldatenformat 26 für die Kommunikationsdaten 14. Somit ist der Zielzustand Z erreicht. Das Zieldatenformat 26 kann beispielsweise ein binäres Format mit Bytes vorsehen, sodass zum Übertragen der Speicherdaten 17 ein geringeres Datenvolumen an Kommunikationsdaten 14 nötig ist als im Ausgangszustand A, in welchem lesbare Textdaten erzeugt wurden.

Somit wird also aus demselben Speicherelement 19 der Speicherdaten 17 ein in das Zieldatenformat 26 umgewandeltes Strukturelement S', welches als Teil der Kommunikationsdaten 14 ausgesendet werden kann, erzeugt.

Im Folgenden ist das Verfahren noch einmal im Zusammenhang mit einem besonders bevorzugten Ausführungsbeispiel beschrieben.

Die Computerwissenschaften unterscheiden eine Vielzahl verschiedener Serialisierungs-Formate für Speicherdaten 17 oder Nutzdaten. Zwei bekannte Vertreter sind Extensible Markup Language (kurz: XML) und Protocol Buffers (kurz: Protobuf). Diese Formate haben zum Teil sehr unterschiedliche Anwendungsgebiete und müssen daher auch verschiedene Anforderungen erfüllen.

Das XML-Format wird hauptsächlich für Konfigurationsdateien von Anwendungen genutzt. Damit der Anwender seine Einstellungen schnell überblicken und ggf. anpassen kann, müssen XML Dateien für den Menschen lesbar sein. Die Kompaktheit der zu speichernden Daten rückt dabei in den Hintergrund, da sie nicht über ein Netzwerk übertragen werden müssen. Protobuf hingegen ist ein Format, das für die Maschine-To-Machine Kommunikation optimiert wurde. Es soll einen effizienten Informationsaustausch zwischen Softwareanwendungen über ein Netzwerk ermöglichen und muss daher nicht für den Menschen lesbar sein. Protobuf-Nachrichten sind bloße Byte Streams und damit sehr viel kompakter, als vergleichbare XML-Serialisierungen.

Der Vorgang der Serialisierung beschreibt den Export von Informationen aus einem internen Datenmodell der Speicherdaten (zum Beispiel einem Java Objekt) in eine übertragungsfähige Datei (zum Beispiel XML oder Protobuf). Deserialisierung hingegen beschreibt den Import von Informationen aus einer Datei zurück in ein internes Datenmodell der Speicherdaten.

Für beide Vorgänge wird pro Nachrichtentyp (also beispielsweise den Nachrichttyp zum Mitteilen eines Typstatus) eine Schema Definition benötigt. Dabei handelt es sich um einen Bauplan, der definiert, wie eine Datei aufgebaut sein darf und welche Elemente sie enthalten darf. Sowohl für die Serialisierung als auch für die Deserialisierung wird eine Schema Definition benötigt. Der Inhalt von XML Dateien wird durch XML Schema Definitions (kurz: XSD) spezifiziert, der Inhalt von Protobuf Bytestreams hingegen durch Proto Definitionen.

Die Gerätekommunikation dringt mit bei Fahrzeugen mehr und mehr in die digitale Welt vor. Bereits heute sind alle Fahrzeuge via Internet mit einem Backend-Internetserver verbunden, um dem Fahrzeugnutzer mobile Online-Dienste (sogenannte Connect-Dienste) anzubieten, die z.B. via Smartphone-Applikation (App) von außerhalb des Kraftfahrzeugs (z.B. bequem von der Couch aus) Remote-Zugriff oder Fernzugriff auf das Kraftfahrzeug ermöglichen. Auf diese Weise können die Fahrzeugnutzer zum Beispiel den Fahrzeugzustand im Smartphone anzeigen oder auch Timer für die Standheizung des Kraftfahrzeugs programmieren.

Beispielsweise will man den Fahrzeugstatus aus dem Steuergerät im Fahrzeug an unser Backend senden, um diese Informationen anschließend dem Fahrzeugnutzer in der App anzeigen zu können. Die Fahrzeugstatus-Informationen werden von einer Software-Applikation auf dem Steuergerät in einem internen Datenmodell aus Speicherdaten (z.B. in einem Java Objekt) verwaltet. Um diese Informationen über das Internet an einen Kommunikationspartner (Backend-Internetserver) zu übertragen, muss das Datenmodell zunächst serialisiert werden. Hierfür sind viele Formate denkbar, z.B. das XML Format.

Sobald die XML Datei das Backend erreicht, wird sie dort vom Fahrzeugstatus-Dienst entgegengenommen, der die Datei sofort wieder in das interne Modell zurückwandelt. Für diese Deserialisierung sowie die Validierung, dass die Nachricht eine gültige Struktur hat, wird wiederum die XSD als Metamodelldatei benötigt.

Man kann aber an einer Umstellung von XML auf Protobuf interessiert sein, weil das XML-Format eigentlich ungeeignet für die Datenübertragung zwischen zwei Software-Komponenten ist. Nach XML/XSD kann man nun auf Protobuf umsteigen. Auf diese Weise schrumpfen die Nachrichtengrößen auf einen Bruchteil zusammen, was das zu übertragene Datenvolumen verringert. Dies ist mit einem deutlichen finanziellen Vorteil verbunden. Diese Umstellung erfordert keine Anpassung der Applikationssoftware, da das interne Datenmodell dabei vollkommen identisch bleiben kann. Lediglich das Nachrichten-Datenformat sowie die zugehörige Schema Definition der Metamodelldateien muss ausgetauscht werden.

Stand heute werden alle Nachrichten der mobilen Online-Dienste via XML serialisiert. Jeder Nachrichtentyp wird wiederum durch eine XSD-Datei spezifiziert. Für die Umstellung von XML auf Protbuf muss nun für jede existierende XSD-Datei (also für jede definierte Nachricht der Gerätekommunikation) jeweils eine Proto-Definition entwickelt werden, die dieselben Informationen modelliert, wie zuvor die XSD. Nur so kann die Applikationslogik der Dienste unverändert übernommen werden. Das stellt die Entwickler vor eine wahre Herausforderung, denn dies bedeutet bei hunderten von XSD Dateien einen enormen manuellen Aufwand bei hohem Fehler-Risiko.

Beide Probleme, sowohl der große manuelle Aufwand als auch das Fehlerrisiko durch die manuelle Modellierung, lassen sich durch eine automatisierte Transformation mittels der Transformationsvorschrift lösen. Diese Idee sei zunächst durch folgende Metapher veranschaulicht:
XSD und Protobuf können als zwei verschiedene Sprachen zur Datenstrukturierung betrachtet werden. Zwar haben beide Sprachen jeweils ihr eigenes Vokabular, ihre eigene Syntax und Semantik zur Beschreibung von Datenstrukturen. Dennoch können mit beiden Sprachen die gleichen Nachrichteninhalte spezifiziert werden. Infolgedessen muss es möglich sein, die eine Sprache in die andere zu übersetzen, ohne Informationen über die Nachrichteninhalte zu verlieren oder zu verfälschen.

Die Umsetzung der Idee erfolgt durch eine Transformation der Metamodelldatei von XSD nach Proto-Schema. Dabei werden alle Modellelemente (Speicherschritte) der Quell-XSD rekursiv durchlaufen. Für jedes in der XSD gefundene Strukturelement (Speicherschritt S) wird in der Ziel-Proto ein semantisch äquivalentes Protobuf-Strukturelement (Strukturelement S') erzeugt. Diese Sub-Transformationen können in einigen Fällen simpel sein. So entsteht im Proto-Schema beispielsweise für jedes XSD-Element vom Typ "ComplexType" ein gleichnamiges Element vom Typ "Message". Andere Sub-Transformationen sind komplizierter. ListenElemente, die gemäß XSD-Syntax durch das Attribut maxOccurs="unbounded" spezifiziert sind, müssen gemäß der Erfindung in einem Proto File durch den

Feldmodifikator "repeated" modelliert werden. Auf diese Weise werden alle möglichen Elementtypen einer XSD durch einen Transformationsalgorithmus in ein Proto-Äquivalent umgewandelt. Als Ergebnis entsteht für eine Quell-XSD ein semantisch identisches Proto File.

Der Algorithmus oder die Transformationsvorschrift 29 für die Ausführung der Modelltransformation von XSD nach Proto Schema kann in Form eines Java-Prototypen implementiert werden.

Der Bedarf, XSD nach Proto Schema zu konvertieren, ist nicht nur für die Gerätekommunikation relevant, sondern theoretisch für jeden Betrieb, der von XML Payloads auf Protobuf umstellen möchte. Je größer die Menge an XSD Files desto weniger praktikabel ist eine manuelle Modellierung und desto mehr lohnt sich eine automatisierte Modelltransformation. Speicherdaten mittels Metamodell in Kommunikationsdaten umzuwandeln wird durch Serialisierer ermöglicht, die es für viele Formate gibt. Die Idee erweitert diesen Ansatz, indem Metamodelle für heute eingesetzte Datenformate automatisiert in gleichbedeutende Metamodelle für zukünftige Datenformate umgewandelt werden können, sodass in Software lediglich die verfügbarer Serialisierer sowie die bisher verwendeten Metamodelle ausgetauscht werden müssen.

Insgesamt zeigen die Beispiele, wie durch die Erfindung eine Konvertierung von XSD nach Protobuf bereitgestellt werden kann.

## Patentansprüche

1. Verfahren zum Wechseln eines Datenformats von Kommunikationsdaten (14) einer Gerätekommunikation, die zwischen einem ersten Kommunikationspartner (11) und einem zweiten Kommunikationspartner (12) vorgesehen ist, wobei von einem Ursprungsdatenformat (22) in ein Zieldatenformat (26) gewechselt werden soll, wobei
der jeweilige Kommunikationspartner (11, 12) derart ausgestaltet wird, dass er zu versendende Speicherdaten (17) eines jeweiligen lokalen Datenspeichers (18) auf der Grundlage einer ersten Metamodelldatei (21) mittels eines ersten Serialisierers (20) in das Ursprungsdatenformat (22) umwandelt und die in das Ursprungsdatenformat (22) umgewandelten Speicherdaten (23) als Kommunikationsdaten (14) aussendet, wobei die erste Metamodelldatei (21) alle im Ursprungsdatenformat zu sendenden Strukturelemente (S) eines der ersten Metamodelldatei (21) zugeordneten Nachrichtentyps definiert, und wobei
durch eine Prozessoreinrichtung (18) aus der ersten Metamodelldatei (21) mittels einer Transformationsvorschrift (29) eine zweite Metamodelldatei (27) erzeugt wird, wobei durch die Transformationsvorschrift (29) das jeweilige Strukturelement (S) der ersten Metamodelldatei (21) einem jeweils korrespondierenden Strukturelement (S') zugeordnet wird, sodass die zweite Metamodelldatei (27) alle im Zieldatenformat zu sendenden Strukturelemente (S') des Nachrichtentyps definiert,
und in dem jeweiligen Kommunikationspartner (11, 12) dessen erster Serialisierer (20) durch einen zweiten Serialisierer (20') für das Zieldatenformat und dessen erste Metamodelldatei (21) durch die zweite Metamodelldatei (27) ersetzt wird,
wobei
das erste Datenformat (22) ein XML-Format ist und als erste Metamodelldatei (21) eine XSD-Datei zugrunde gelegt wird und
das zweite Datenformat (26) ein Protobuf-Format ist und als zweite Metamodelldatei (27) eine Protobuf-Definitionsdatei erzeugt wird und dabei durch die erste Metamodelldatei (21) ein Datenbaum definiert ist und durch die Prozessoreinrichtung (28) der Datenbaum rekursiv durchlaufen wird und für jedes Blatt des Baumes ein Strukturelement (S') erzeugt wird, **dadurch gekennzeichnet, dass** Listenelemente, die gemäß XSD-Syntax durch das Attribut maxOccurs="unbounded" spezifiziert sind, in dem Proto-File durch den Feldmodifikator "repeated" modelliert werden und
ein Funktionsumfang einer Liste mit begrenzter Anzahl an Listenelementen erhalten bleibt, indem zwar nur die erste Metamodelldatei (21) als Strukturelement (S) eine Liste mit auf eine Maximalanzahl begrenzten Listenelementen vorsieht und durch die Transformationsvorschrift (29) die Liste in der zweiten Metamodelldatei (27) auf eine Liste mit unbegrenzter Anzahl an Listenelementen abgebildet wird, aber zusätzlich für den jeweiligen Kommunikationspartner (11, 12) Programmdaten mit Programminstruktionen für eine Speicherroutine bereitgestellt werden, durch welche bei Verwendung der zweiten Metamodelldatei (27) das Begrenzen der Liste auf die Maximalanzahl der Listenelemente durch Beenden des Sendens der Liste bei Erreichen der Maximalanzahl erfolgt.

2. Verfahren nach Anspruch 1, wobei das Ursprungsdatenformat (22) lesbare Textdaten als Strukturelemente (S) und das Zieldatenformat (26) maschinenlesbare Binärdaten als Strukturelemente (S') vorsieht.

3. Verfahren nach einem der vorhergehenden Ansprüche, wobei die zweite Metamodelldatei (27) in allen Kommunikationspartnern (11, 12) bereitgestellt wird.

4. Prozessoreinrichtung (28) mit zumindest einem Prozessor und einem Datenspeicher, wobei die Prozessoreinrichtung dazu eingerichtet ist, die die Prozessoreinrichtung (28) betreffenden Schritte eines Verfahrens nach einem der vorhergehenden Ansprüche durchzuführen.

## Claims

1. Method for changing a data format of communication data (14) of a device communication provided between a first communication partner (11) and a second communication partner (12), wherein a change is to be made from a source data format (22) to a target data format (26), wherein
the respective communication partner (11, 12) is configured in such a way that it converts memory data (17) of a respective local data memory (18) that is to be transmitted on the basis of a first metamodel file (21) by means of a first serializer (20) into the source data format (22) and transmits the memory data (23) converted into the source data format (22) as communication data (14), wherein the first metamodel file (21) defines all structural elements (S) of a message type assigned to the first metamodel file (21) that are to be transmitted in the source data format, and wherein
a second metamodel file (27) is generated by a processor device (18) from the first metamodel file (21) by means of a transformation rule (29), the respective structural element (S) of the first metamodel file (21) being assigned to a respective corresponding structural element (S') using the transformation rule (29), so that the second metamodel file (27) defines all structural elements (S') of the message type that are to be transmitted in the target data format,
and in the respective communication partner (11, 12) its first serializer (20) is replaced by a second serializer (20') for the target data format and its first metamodel file (21) is replaced by the second metamodel file (27),
wherein the first data format (22) is an XML format and an XSD file is used as the basis for the first metamodel file (21), and
the second data format (26) is a protobuf format and a protobuf definition file is generated as second metamodel file (27), and thereby a data tree is defined by the first metamodel file (21) and the data tree is traversed recursively by the processor device (28) and a structural element (S') is generated for each leaf of the tree, **characterised in that**
list elements specified according to XSD syntax by the attribute maxOccurs="unbounded" are modeled in the proto file by the field modifier "repeated", and
a functional range of a list with a limited number of list elements is retained, **in that** only the first metamodel file (21) provides a list with list elements limited to a maximum number as structural element (S) and the list in the second metamodel file (27) is mapped to a list with an unlimited number of list elements by the transformation rule (29), but in addition program data with program instructions for a storage routine are provided for the respective communication partner (11, 12), by means of which, when the second metamodel file (27) is used, the list is limited to the maximum number of list elements by terminating the transmission of the list when the maximum number is reached.

2. Method according to claim 1, wherein the source data format (22) provides readable text data as structural elements (S) and the target data format (26) provides machine-readable binary data as structural elements (S').

3. Method according to any one of the preceding claims, wherein the second metamodel file (27) is made available in all communication partners (11, 12).

4. Processor device (28) comprising at least one processor and a data memory, the processor device being arranged to perform the steps relating to the processor device (28) of a method according to any one of the preceding claims.

## Revendications

1. Procédé de changement d'un format de données de données de communication (14) d'une communication entre appareils prévue entre un premier partenaire de communication (11) et un second partenaire de communication (12), dans lequel un format de données d'origine (22) doit être changé en un format de données de destination (26), dans lequel :
le partenaire de communication (11, 12) respectif est conçu de manière à convertir des données de mémoire (17) à envoyer d'une mémoire de données locale (18) respective dans le format de données d'origine (22) sur la base d'un premier fichier de métamodèle (21) au moyen d'un premier sérialisateur (20) et envoie sous forme de données de communication (14) les données de mémoire (23) converties dans le format de données d'origine (22), dans lequel le premier fichier de métamodèle (21) définit tous les éléments de structure (S), à envoyer dans le format de données d'origine, d'un type de message associé au premier fichier de métamodèle (21), et dans lequel
un second fichier de métamodèle (27) est généré au moyen d'une instruction de transformation (29) à partir du premier fichier de métamodèle (21) grâce à un appareil de traitement (18), dans lequel l'élément de structure (S) respectif du premier fichier de métamodèle (21) est associé grâce à l'instruction de transformation (29) à un élément de structure (S') respectivement correspondant, de sorte que le second fichier de métamodèle (27) définit tous les éléments de structure (S'), à envoyer dans le format de données de destination, du type de message,
et, au sein de chaque partenaire de communication (11, 12), le premier sérialisateur (20) est remplacé par un second sérialisateur (20') destiné au format de données de destination et dont le premier fichier de métamodèle (21) est remplacé par le second fichier de métamodèle (27),
dans lequel le premier format de données (22) est un format XML et un fichier XSD est pris pour base comme premier fichier de métamodèle (21), et
le second format de données (26) est un format Protobuf et un fichier de définition Protobuf est généré en tant que second fichier de métamodèle (27), et un arbre de données est défini grâce au premier fichier de métamodèle (21) et l'arbre de données est parcouru de manière récursive par l'appareil de traitement (28) et un élément de structure (S') est généré pour chaque feuille de l'arbre, **caractérisé en ce que**
des éléments de liste, spécifiés grâce à l'attribut maxOccurs="unbounded" conformément à la syntaxe XSD, sont modélisés dans le fichier Proto grâce au modificateur de champ "repeated" ; et
une étendue des fonctions d'une liste comprenant un nombre limité d'éléments de liste est conservée, bien que seul le premier fichier de métamodèle (21) prévoit en tant qu'élément de structure (S) une liste avec des éléments de liste limités à un nombre maximal et que la liste soit mappée dans le second fichier de métamodèle (27) grâce à l'instruction de transformation (29) sur une liste comprenant un nombre illimité d'éléments de liste, des données de programme comprenant des instructions de programme pour une routine de mémoire sont cependant fournies de manière supplémentaire au partenaire de communication (11, 12) respectif, grâce auxquelles, lorsque le second fichier de métamodèle (27) est utilisé, la limitation de la liste au nombre maximal d'éléments de liste s'effectue à la fin de l'envoi de la liste lorsque le nombre maximal est atteint.

2. Procédé selon la revendication 1, dans lequel le format de données d'origine (22) fournit des éléments de structure (S) sous forme de données de texte lisibles et le format de données de destination (26) fournit des éléments de structure (S') sous forme de données binaires lisibles par machine.

3. Procédé selon l'une quelconque des revendications précédentes, dans lequel le second fichier de métamodèle (27) est fourni au sein de tous les partenaires de communication (11, 12).

4. Appareil de traitement (28) comprenant au moins un processeur et une mémoire de données, dans lequel l'appareil de traitement est conçu pour mettre en oeuvre les étapes, relatives à l'appareil de traitement (28), d'un procédé selon l'une quelconque des revendications précédentes.
